# EUROPÄISCHE PATENTSCHRIFT

(11) **EP 1 256 037 B1**
(45) Veröffentlichungstag und Bekanntmachung des Hinweises auf die Patenterteilung: **28.04.2004**
(21) Anmeldenummer: 01909556.1
(22) Anmeldetag: 02.02.2001
(51) Int. Cl.: G05B 23/02, G05B 13/02

(54) **VERFAHREN ZUM BETRIEB EINER TECHNISCHEN ANLAGE**
METHOD FOR OPERATING A TECHNICAL FACILITY
PROCEDE POUR L'EXPLOITATION D'UNE INSTALLATION TECHNIQUE

(30) Priorität: 14.02.2000 DE 10006455
(43) Veröffentlichungstag der Anmeldung: 13.11.2002
(73) Patentinhaber: SIEMENS AKTIENGESELLSCHAFT, 80333 München (DE)
(72) Erfinder: FANDRICH, Jörg, 91096 Möhrendorf (DE); GASSMANN, Jörg, 91338 Igensdorf (DE); GERLACH, André, 02943 Weisswasser (DE)
(86) Internationale Anmeldenummer: PCT/DE2001/000418
(87) Internationale Veröffentlichungsnummer: WO 2001/059535

(56) Entgegenhaltungen:
- EP-A- 0 690 557
- EP-A- 0 694 825
- WO-A-99/50749
- DE-A- 4 204 047
- US-A- 4 649 515
- US-A- 5 295 061
- K.IWAHORI ET AL: "EFFECT OF FUZZY CONTROL ON INFLUENT VARIATIONS IN A PILOT-SCALE ACTIVATED SLUDGE PROCESS " COMPUTER APPLICATIONS IN BIOTECHNOLOGY 1998, 31. Mai 1998 (1998-05-31), Seiten 509-514, XP001006356 UK

## Beschreibung

Die Erfindung betrifft eine Hydrazindosiereinrichtung für einen Wasser-Dampfkreislauf.

In vielen modernen technischen Anlagen, beispielsweise Kraftwerken, werden Expertensysteme zur Diagnose des Betriebszustandes eingesetzt, um den Operatoren Hilfestellung für den Betrieb des Kraftwerkes - besonders bei einem Störfall - zu geben. Die von einem Expertensystem erstellten Diagnosen geben üblicherweise Auskunft über die Art einer Störung, den Ort ihres Auftretens und mögliche Maßnahmen zu deren Behebung. Der Operator wird dadurch bei der Aufgabe, mögliche Wirkzusammenhänge zu erkennen, entlastet und eine Störbehebung wird ihm dadurch erleichtert. Das Expertensystem enthält dabei sogenanntes Expertenwissen als Wissensbasis, die dann zur Ermittlung der Diagnosen herangezogen wird.

In DE 43 38 237 A1 wird ein Verfahren und eine Einrichtung zum Analysieren einer Diagnose eines Betriebszustandes einer technischen Anlage angegeben. Dabei wird ein Symptombaum aufgebaut, bei dem je nach Störfall ein Pfad aktiviert und ein Diagnosetext ausgegeben wird. In einem Datenspeicher werden Regeln, Symptomdefinitionen und Diagnosetexte gespeichert. Die Darstellung aller logischen Bestandteile der Diagnose und deren Verknüpfungsstruktur ermöglicht es, die Diagnose zurück zu verfolgen und somit zu analysieren. So ist eine komplette Spurverfolgung der Diagnose über alle zu ihr beitragenden aktiven Regeln möglich. Der Operator hat dadurch einen möglichst umfassenden Überblick über die Wirkzusammenhänge der aktuell anstehenden Störung und kann dann durch manuelle Schalthandlungen der Störung gezielt entgegenwirken. Nachteilig bei diesem Verfahren ist, dass es in die Verantwortung des Operators gelegt ist, geeignete Strategien zur Beseitigung der Störung zu entwickeln und Gegenmaßnahmen einzuleiten; besonders bei zeitkritischen Vorgängen ist der Mensch leicht überfordert.

In DE 44 21 245 A1 wird eine Einrichtung zur Simulation des Betriebs einer technischen Anlage beschrieben. Die Einrichtung enthält einen programmgestützten Simulationsbaustein und Regeln über das technologische Wissen. Aus den Simulationseingangsdaten werden Symptome gebildet, die dem Simulationsbaustein zugeführt werden und der daraus eine Diagnose erstellt. Die Verarbeitung der Daten innerhalb der Einrichtung kann dabei Schritt für Schritt beobachtet werden. In Abhängigkeit von der erzeugten Diagnose ist abschließend eine Rückkopplung auf den simulierten Anlagenbetrieb durchführbar. Dabei ist im Einzelnen nachvollziehbar, welche Änderungen im Betriebszustand der technischen Anlage durch die entsprechend der Diagnose hervorgerufenen Rückkopplungsmaßnahmen bewirkt werden.
In oben genannter Schrift finden sich keine Hinweise über die Strategien, die bei der Rückkopplung der Diagnose auf den simulierten Prozess zur Anwendung kommen könnten, um einen gewünschten Normalbetrieb wieder herzustellen.

Der Erfindung liegt die Aufgabe zugrunde, eine Hydrazindosiereinrichtung für einen Wasser-Dampfkreislauf anzugeben, welche einem Sauerstoffeintrag sicher und schnell entgegenwirkt.

Die Aufgabe wird erfindungsgemäß gelöst mit den Merkmalen des Anspruchs 1.

Durch die gleichzeitige Verwendung der Wissensbasis des Expertensystems für Diagnose und regelnden Eingriff in die technische Anlage wird das vorhandene Expertenwissen konsequent ausgenutzt und zweigleisige Überlegungen, die im Falle einer getrennten Realisierung von Diagnose und Erzeugung eines regelnden Eingriffs notwendig wären, werden weitgehend überflüssig und die dadurch möglicherweise entstehenden Fehlerquellen ausgeschaltet. Darüber hinaus ist durch die einheitliche Lösung von Diagnose und regelndem Eingriff der Zusammenhang zwischen beiden sehr übersichtlich und gut darstellbar, beispielsweise auf dem Kontrollbildschirm des Operators einer technischen Anlage. Eine Erweiterung der Diagnosemöglichkeiten kann darüber hinaus auch gleichzeitig zu einer Verbesserung des regelnden Eingriffs genutzt werden.

Dabei erstellt das Expertensystem die Diagnose mittels Messwerten aus der technischen Anlage und der regelnde Eingriff wird mindestens aus einem der Messwerte und/oder einer aus den Messwerten abgeleiteten Größe festgelegt. Somit kann zur Erstellung der Diagnose und zur Festlegung des regelnden Eingriffs auf die selbe Datenbasis der Messwerte zurückgegriffen werden.

Vorteilhaft wird als aus den Messwerten abgeleitete Größen die Regelabweichung und/oder deren Änderung gebildet. Auch hier kann eine Datenbasis der Messwerte sowohl für die Erstellung der Diagnose als auch für die Festlegung des regelnden Eingriffs herangezogen werden.

Vorteilhaft legt die Wissensbasis den regelnden Eingriff vollständig fest. Dies bedeutet, dass für beide Aufgaben - Diagnose und regelnder Eingriff zur Beseitigung der Störung - nur eine einzige Wissensbasis zur Lösung herangezogen werden muss.

Eine bevorzugte Ausführungsform der Erfindung besteht darin, dass die Wissensbasis des Expertensystems nach Methoden der Fuzzy Logic formuliert ist. Expertensysteme, bei denen eine Modellierung des Wissens nach derartigen Methoden möglich ist, sind handelsüblich (z.B. DIWA oder DIGEST der Firma Siemens AG). Die Verwendung eines derartigen Expertensystems gestattet die Konzentration auf die wichtige Aufgabe der Bereitstellung einer technologischen Wissensbasis und befreit von Überlegungen im Hinblick auf die Formalismen bei der Formulierung der Wissensbasis.

Vorteilhaft enthält die bei der Formulierung der Wissensbasis verwendete Fuzzy Logic spezifische, linguistische IF...THEN-Regeln. Das Vorgehen bei der Formulierung derartiger Regeln ist bekannt. Das Wissen für sowohl Diagnose, als auch regelnden Eingriff, kann so einheitlich erfasst und verarbeitet werden.

Vorteilhaft werden die Regelabweichung und/oder daraus abgeleitete Größen fuzzyfiziert. Darunter versteht man die Umsetzung physikalisch relevanter Eingabewerte in sogenannte Zugehörigkeitswerte. Die Zugehörigkeitswerte wiederum bestimmen den Grad der Regelaktivierung. Einzelheiten und Grundlagen zur Fuzzy Logic können z. B. Hans-Heinrich Bothe: "Neuro-Fuzzy-Methoden", Springer, Berlin u.a., 1998 entnommen werden. Als weitere Literaturquelle bietet sich auch beispielsweise Dimiter Driankov u.a.:, "An Introduction to Fuzzy Control", Springer, Berlin, Heidelberg, 1993 an. Die Fuzzyfizierung der genannten Größen hat den Vorteil, dass die so aufbereiteten Größen dann in einem Fuzzy-Regler zur Ermittlung des regelnden Eingriffs verarbeitet werden können. Auf diese Weise können beiden Aufgabenstellungen - Diagnose und Ermittlung eines regelnden Eingriffs - mit einheitlichen Mitteln gelöst werden, wobei so auch die zur Ermittlung des regelnden Eingriffs nötigen Größen in einer bevorzugten Form vorliegen.

Ein Ausführungsbeispiel der Erfindung wird anhand der beigefügten Zeichnungen erläutert. Es zeigt:
- FIG 1: eine schematische Darstellung der wichtigsten Komponenten eines Expertensystems verbunden mit einer technischen Anlage zur gleichzeitigen Erstellung von Diagnosen des Betriebszustandes der technischen Anlage und Bestimmung eines regelnden Eingriffs in die technische Anlage,
- FIG 2: eine technische Anlage mit den zugehörigen Reglern und Diagnosesystem, und
- FIG 3: eine erfindungsgemäße Hydrazindosiereinrichtung für einen Wasser-Dampf-Kreislauf einer technischen Anlage, wobei nach einer Diagnose eines störenden Sauerstoffeintritts durch das Expertensystem eine automatische Zudosierung von Hydrazin zur Unterbindung der drohenden Korrosion wichtiger Komponenten des Wasser-Dampf-Kreislaufs erfolgt.

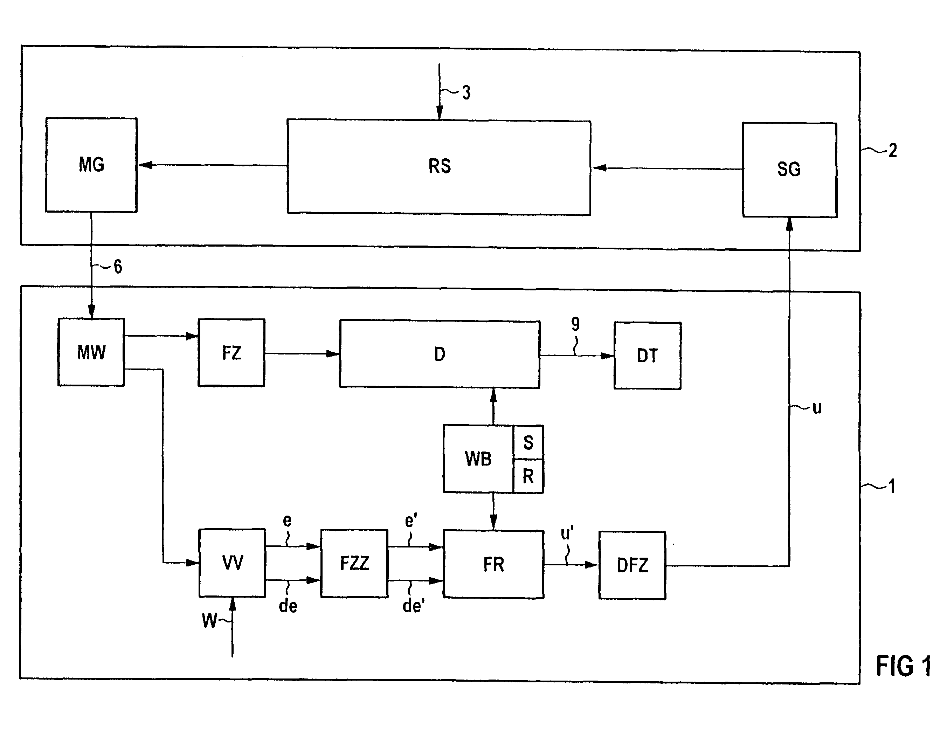

FIG 1 zeigt ein Expertensystem 1, das mit einer technischen Anlage 2 verbunden ist. Das Expertensystem nimmt dabei die Aufgaben Diagnose des Betriebszustandes und Bestimmung eines regelnden Eingriffs zur automatischen Behebung einer Störung wahr. Die technische Anlage besteht dabei aus einer oder mehreren Regelstrecken RS, einem oder mehreren Messgliedern MG und einem oder mehreren Stellgliedern SG. Mit 3 ist angedeutet, dass auf die Regelstrecken RS nicht nur die von den Stellgliedern SG vorgegebenen Stellgrößen, sondern auch Störgrößen einwirken können, die gegebenenfalls nicht einmal messtechnisch erfasst sind. Die Messglieder MG liefern Messwerte 6 an das Expertensystem 1, die dort in einer Datenbasis MW gespeichert werden. Die Messwerte werden nach bekannten Methoden in einer Verarbeitungsstufe FZ fuzzyfiziert. Eine Wissensbasis WB enthält Symptome S und Regeln R, die aufgrund von technologischem Expertenwissen nach bekannten Methoden der Fuzzy Logic formuliert werden. Aufgrund der aktuell vorliegenden, fuzzyfizierten Messwerte und der Symptome S und Regeln R der Wissensbasis WB wird in einer Diagnoselogik D eine Diagnose 9 über den aktuellen Betriebszustand der technischen Anlage erstellt und als Diagnosetext in einer Anzeigeeinheit, z.B. einem Diagnosefeld DT eines Bildschirm-Bildes, angezeigt. Die Datenbasis MW versorgt parallel zur Diagnoseeinheit D auch eine Vorverarbeitungsstufe VV eines Fuzzy-Reglers mit Messwerten 8, die vom Fuzzy-Regler FR zu dem regelnden Eingriff in die technische Anlage verarbeitet werden. In der Vorverarbeitungsstufe VV werden die für die Regelung verwendeten Größen Regelabweichung e und Änderung de der Regelabweichung e gebildet, wobei auch der Sollwert w einer zu regelnden Größe verwendet wird. Die Größen Regelabweichung e und Änderung de der Regelabweichung e werden anschließend nach bekannten Methoden in einer weiteren Verarbeitungsstufe FZZ fuzzyfiziert und als fuzzyfizierte Größen e' bzw. de' dem Regler FR zugeführt. Dieser Regler FR ist als Fuzzy-Regler ausgeführt, der auf die gleiche Wissensbasis WB zugreift, die auch zur Erstellung der Diagnose 9 verwendet wird. Der Fuzzy-Regler FR liefert eine fuzzyfizierte Stellgröße u', die in einer weiteren Verarbeitungsstufe DFZ durch anschließende Defuzzyfizierung in einen scharfen Ausgangswert u umgewandelt wird. Dieser scharfe Ausgangswert u wird zur Ansteuerung mindestens eines der Stellglieder SG der technischen Anlage verwendet. Der regelnde Eingriff in die technische Anlage erfolgt so lange, bis ein gewünschter Normalzustand erreicht ist.

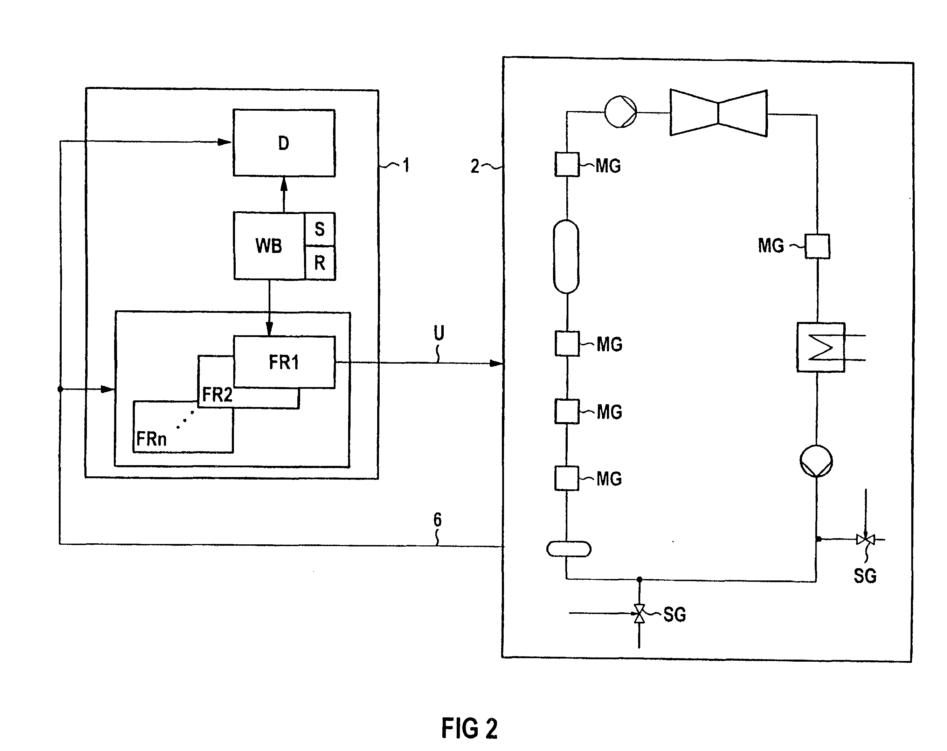

FIG 2 zeigt den Normalfall, dass die technische Anlage 2 eine Mehrzahl an Mess- und Stellgliedern MG bzw. SG besitzt. Verbunden mit dieser technischen Anlage 2 ist das Expertensystem 1, das den Betriebszustand der technischen Anlage diagnostiziert und im Falle einer Störung einen oder mehrere regelnde Eingriffe u in die technische Anlage 2 vornimmt. Der Betriebszustand der technischen Anlage wird mittels Messwerten 6, die von den Messgliedern MG der technischen Anlage 2 geliefert werden, an das Expertensystem 1 übermittelt.

Das Expertensystem 1 besteht aus den Hauptkomponenten Diagnoseeinheit D, Wissensbasis WB und einem oder mehreren Fuzzy-Reglern FR1 bis FRn. Das Expertensystem 1 erstellt aufgrund der in der Wissensbasis enthaltenen Symptome S und Regeln R eine Diagnose des Betriebszustandes der technischen Anlage 2. Wird eine Störung identifiziert, so werden automatisch ein oder mehrere regelnde Eingriffe u durch mindestens einen der Fuzzy-Regler FR1 bis FRn in die technische Anlage 2 ausgelöst. Der oder die Fuzzy-Regler greifen zur Bildung einer oder mehrerer Stellgrößen u auf die gleiche Wissensbasis WB zurück, die auch zur Erstellung der Diagnosen verwendet wird. Die von dem oder den Fuzzy-Reglern erzeugten Stellgrößen u wirken auf das oder die Stellglieder SG der technischen Anlage 2 ein, so dass ein Normalzustand wieder hergestellt wird. Die gesamte technische Anlage 2 wird also durch das Expertensystem 1 überwacht, Diagnosen über den Betriebszustand werden erstellt und im Falle einer identifizierten Störung werden automatisch ein oder mehrere regelnde Eingriffe u in die technische Anlage 2 durch den oder die Fuzzy-Regler ausgeführt, bis ein gewünschter Normalzustand wieder hergestellt ist. Auf diese Weise werden durch Fehler in der technischen Anlage 2 ausgelöste Störungen automatisch ausgeregelt.

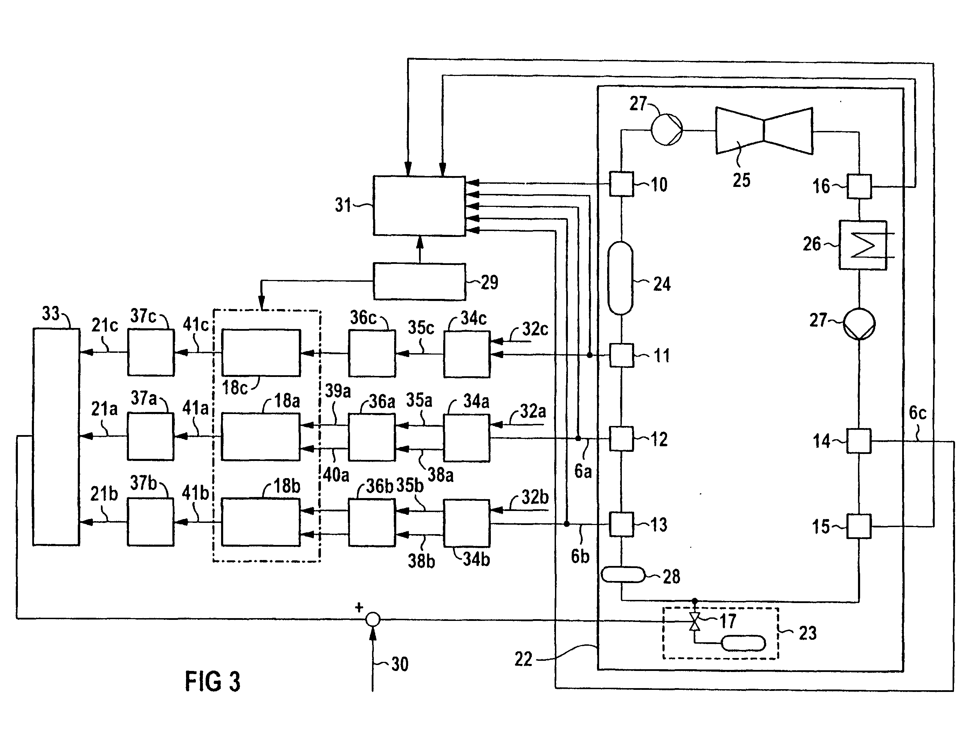

FIG 3 zeigt eine erfindungsgemäße Hydrazindosiereinrichtung für einen Wasser-Dampf-Kreislauf 22 einer technischen Anlage, wobei nach einer Diagnose eines störenden Sauerstoffeintritts durch das Expertensystem eine automatische Dosiereinrichtung 23 betätigt wird, die Hydrazin zur Unterbindung einer drohenden Korrosion wichtiger Komponenten in den Wasser-Dampf-Kreislauf 22 einspeist. Der Wasser-Dampf-Kreislauf 22 besteht aus den Hauptkomponenten Dampferzeuger 24, Turbine 25, Kondensator 26, einer oder mehrerer Pumpen 27, Speisewasserbehälter 28, Messgliedern 10 bis 16 und einem Dosierventil 17 als Stellglied der Dosiereinrichtung 23. Ein möglicher Sauerstoffeintritt infolge einer Leckage in den WasserDampf-Kreislauf 22 stellt einen Störfall dar, der das Problem der Korrosion wichtiger Anlagenteile des Wasser-Dampf-Kreislaufs 22 hervorruft. Die Folgen eines derartigen Sauerstoffeintritts können durch dosierte Zugabe von Hydrazin - chemische Formel N₂H₄ - beseitigt werden, das sich mit dem im Wasser-Dampf-Kreislauf 22 infolge der Leckage vorhandenen Sauerstoff verbindet und diesen dadurch davon abhält, eine chemische Korrosions-Reaktion in Gang zu setzen. Bei der Dosierung von Hydrazin sollte darauf geachtet werden, nicht mehr Hydrazin als nötig zu dosieren, da ein Überschuss an Hydrazin ein weiteres Problem aufwirft, nämlich die Aufnahme von Eisen als Schwebestoff und die damit verbundene drohende Ablagerung von Eisenschwebeteilchen, besonders im Dampferzeuger 24. Ein Kompromiss zwischen sicherer Neutralisierung der korrodierenden Wirkung von Sauerstoff durch reichliche Hydrazinzugabe und möglichst guter Verhinderung der Einlagerung von Eisenschwebeteilchen ist daher anzustreben.

Die Messglieder 10 bis 16, die sich verteilt im Wasser-Dampf-Kreislauf 22 der technischen Anlage befinden, liefern Messwerte über den Betriebszustand an das Expertensystem. Zur Diagnose eines störenden Sauerstoffeintritts in den Wasser-Dampf-Kreislauf 22 der technischen Anlage werden im Wesentlichen der am Messglied 12 abgreifbare Messwert 6a der Sauerstoffkonzentration im Speisewasser vor dem Dampferzeuger 24, der an gleicher Stelle am Messglied 13 gewonnene Messwert 6b des Redoxpotentials, der ein Maß für die Konzentration des sich im Wasser-Dampf-Kreislauf 22 befindlichen Hydrazins ist, und der am Messglied 14 verfügbare Messwert 6c der Sauerstoffkonzentration nach dem Kondensator 26 verwendet.
Die anderen Messglieder dienen im Wesentlichen zur Kationen-Leitfähigkeitsmessung; die dort gewonnenen Messwerte sind zusätzliche Kriterien, die einen Sauerstoffeintritt in den Wasser-Dampf-Kreislauf 22 bestätigen, und grenzen den Ort eines Sauerstoffeintritts ein. Im Normalbetrieb sorgt eine relativ hohe Konzentration des Hydrazins für einen niedrigen Sauerstoffgehalt und hält als Puffer den Sauerstoffgehalt auch im Falle eines Lufteintritts niedrig. Dieser Hydrazinvorrat ("Hydrazin-Puffer") hat eine Größe, die nach den Betriebserfahrungen der technischen Anlage festgelegt wird. Diesen Hydrazin-Puffer, der eine Sicherheit gegen Korrosion wichtiger Wasser-Dampf-Kreislauf-Komponenten darstellt, gilt es, auch im Falle einer Störung aufrechtzuerhalten, um Korrosion möglichst sicher zu vermeiden.
Das Expertensystem erhält die vorher genannten Messwerte. Werden in den Messgliedern 12 und 14 Sauerstoffkonzentrationen 6a bzw. 6c gemessen, die über den Werten des Normalbetriebs liegen, und sinkt der Messwert 6b des Redoxpotentials am Messglied 13, so sind dies Indizien für den Störfall eines Sauerstoffeintritts in den Wasser-Dampf-Kreislauf 22. Das Expertensystem erstellt aus diesen Messwerten - unter Zuhilfenahme von zusätzlichen Messwerten der Kationenleitfähigkeit im Wasser-Dampf-Kreislauf 22 an den Messgliedern 10, 11, 15 und 16 - eine Stördiagnose, wobei es zur Erstellung der Diagnose Gebrauch macht von den in der Wissensbasis 29 enthaltenen Symptome und Regeln. Die Messwerte 6a, 6b und 6c der Sauerstoffkonzentrationen und des Redoxpotentials werden parallel auch an drei Fuzzy-Regler 18a, 18b und 18c übergeben, die nach Identifikation eines störenden Sauerstoffeintritts durch das Expertensystem automatisch regelnde Eingriffe 21a, 21b, und 21c auf das Stellglied 17 der Dosiereinrichtung 23 berechnen. Alle drei Fuzzy-Regler - die auch mit den geforderten Sollwerten 32a, 32b und 32c versorgt werden - machen dabei zur Erzeugung des jeweiligen regelnden Eingriffs Gebrauch von den in der Wissensbasis 29 vorhandenen Symptomen und Regeln, die auch zur Erstellung der Stördiagnose verwendet werden.

Der erste Fuzzy-Regler 18c verarbeitet den Messwert 6c der Sauerstoffkonzentration im Wasser-Dampf-Kreislauf nach dem Kondensator 26 und berechnet nach Identifikation einer Störung einen regelnden Eingriff 21c auf das Stellglied 17 für die Hydrazindosiereinrichtung 23. Eine Betrachtung der durch diesen ersten Fuzzy-Regler 18c zu regelnden Regelstrecke ergibt, dass es zur Bildung des regelnden Eingriffs 21c ausreicht, in der Vorverarbeitungsstufe 34c dieses ersten Reglers die Regelabweichung 35c zu bilden, in der Verarbeitungsstufe 36c zu fuzzyfizieren und im Regler weiter zu verarbeiten. Der Regler berechnet eine fuzzyfizierte Stellgröße 41c, die anschließend in der Verarbeitungsstufe 37c defuzzyfiziert, d.h. in einen scharfen Wert für den regelnden Eingriff 21c umgewandelt wird.

Der zweite Fuzzy-Regler 18a verarbeitet den Messwert 6a der Sauerstoffkonzentration im Speisewasser vor dem Dampferzeuger. Aufgrund der etwas komplizierteren Struktur der durch diesen zweiten Fuzzy-Regler 18a zu regelnden Regelstrecke werden in der zugehörigen Vorverarbeitungsstufe 34a die Regelabweichung 35a und ihre Änderung 38a berechnet und anschließend in der Verarbeitungsstufe 36a fuzzyfiziert. Die Änderung 38a der Regelabweichung 35a setzt sich dabei zusammen aus einem differenzierten und einem integrierten Anteil, die Auskunft über das Verhalten der Regelabweichung 35a in der Vergangenheit geben. Der zweite Fuzzy-Regler 18a berechnet aus den fuzzyfizierten Größen Regelabweichung und Änderung der Regelabweichung 39a bzw. 40a einen regelnden Eingriff 21a auf das Stellglied 17 der Hydrazindosiereinrichtung 23. Dabei berechnet der zweite Fuzzy-Regler 18a zunächst eine fuzzyfizierte Stellgröße 41a, die dann in einer Verarbeitungsstufe 37a in einen scharfen Wert für den regelnden Eingriff 21a umgewandelt wird. Zur Bestimmung des regelnden Eingriffs 21a macht der zweite Fuzzy-Regler Gebrauch von den in der Wissensbasis 29 zur Verfügung stehenden Symptome und Regeln, die auch zur Erstellung der Stördiagnose verwendet werden.

Der dritte Fuzzy-Regler 18b erhält den Messwert 6b des Redoxpotentials im Speisewasser vor dem Dampferzeuger 24. Die Messung dieses Messwertes 6b stellt eine Redundanz zur Messung der Sauerstoffkonzentration am Messglied 12 an gleicher Stelle unter Verwendung eines andersartigen Messwertes, der ebenfalls ein Indiz für einen störenden Sauerstoffeintritt liefert, dar. In der zu diesem dritten Fuzzy-Regler 18b zugehörigen Vorverarbeitungsstufe 34b werden wie auch bei dem zweiten Fuzzy-Regler 18a die Regelabweichung 35b und deren Änderung 38b gebildet und anschließend in der Verarbeitungsstufe 36b fuzzyfiziert. Unter Zuhilfenahme der in der Wissensbasis 29 vorhandenen Symptome und Regeln - die auch für die Erstellung der Stördiagnose verwendet werden - berechnet der dritte Fuzzy-Regler 18b einen regelnden Eingriff 21b auf das Stellglied 17 der Hydrazindosiereinrichtung 23. Dabei berechnet der dritte Fuzzy-Regler 18b zunächst eine fuzzyfizierte Stellgröße 41b, die dann in einer Verarbeitungsstufe 37b in einen scharfen Wert für den regelnden Eingriff 21b umgewandelt wird.

Die von den drei Fuzzy-Reglern 18a, 18b und 18c errechneten fuzzyfizierten Stellgrößen 41a, 41b und 41c werden anschließend in den Verarbeitungsstufen 37a, 37b und 37c defuzzyfiziert und als scharfe Stellgrößen 21a, 21b und 21c einem den drei Fuzzy-Reglern nachgeordneten Glied 33 zur Maximalwertbildung aufgeschaltet. Der größte an diesem Glied 33 anstehende Wert aus den Werten der regelnden Eingriffe wird durchgeschaltet und wirkt auf das Stellglied 17 der Hydrazindosiereinrichtung 23 ein. Zur Steigerung der Sicherheit in Bezug auf Korrosionsfestigkeit kann zuvor noch ein Hydrazinüberschussanteil 30 additiv hinzugegeben werden. Es entsteht dann durch die Auswahl des Maximalwertes aus den drei berechneten regelnden Eingriffen und der Zugabe eines zusätzlichen Hydrazinüberschussanteils 30 genügend Sicherheit gegen Korrosion wichtiger Komponenten des Wasser-Dampf-Kreislaufs 22 einer technischen Anlage zur Verfügung, ohne bereits im Normalbetrieb einen unnötig großen HydrazinPuffer im Wasser-Dampf-Kreislauf 22 vorhalten zu müssen. Die Hydrazindosierung erfolgt solange, bis die Größe des Hydrazin-Puffers im Wasser-Dampf-Kreislauf einen vorgegebenen Wert erreicht bzw. von diesem eine noch zu tolerierende Abweichung aufweist.

Unter Regelung wird in diesem Zusammenhang ein Eingriff in eine technische Anlage verstanden, der dafür sorgt, dass eine überwachte Größe in einem vorgegebenen Toleranzband bleibt.

## Patentansprüche

1. Hydrazindosiereinrichtung für einen Wasser-Dampfkreislauf (22), **gekennzeichnet durch**
• ein erstes Messglied (14) zur Ermittlung eines ersten Messwerts (6c) der Sauerstoffkonzentration im Speisewasser nach einem Kondensator (26),
• ein zweites Messglied (12) zur Ermittlung eines zweiten Messwerts (6a) der Sauerstoffkonzentration im Speisewasser vor einem Dampferzeuger (24),
• ein drittes Messglied (13) zur Ermittlung eines dritten Messwerts (6b) der Konzentration von Hydrazin im Speisewasser vor dem Dampferzeuger (24),
• ein Expertensystem (31), welches mindestens die von den Messgliedern (14,12,13) ermittelten Messwerte (6c,6a,6b) als Eingangssignale erhält, zur Erstellung einer Stördiagnose bezüglich eines unerwünschten Sauerstoffeintritts in den Wasser-Dampfkreislauf (22) mittels in einer Wissensbasis (29) vorhandener Symptome (S) und Regeln (R),
• mindestens einen ersten, einen zweiten und einen dritten Fuzzy-Regler (18c,18a und 18b), wobei
- dem ersten Fuzzy-Regler (18c) der erste Messwert (6c) sowie ein entsprechender erster Sollwert (32c),
- dem zweiten Fuzzy-Regler (18a) der zweite Messwert (6a) sowie ein entsprechender zweiter Sollwert (32a), und
- dem dritten Fuzzy-Regler (18b) der dritte Messwert (6b) sowie ein entsprechender dritter Sollwert (32b) zugeführt sind,
mittels der Fuzzy-Regler (18a,18b,18c) nach einer **durch** das Expertensystem (31) mindestens mittels des ersten, des zweiten und des dritten Messwerts (6c,6a,6b) erstellten Stördiagnose jeweils ein regelnder Eingriff (21a,21b,21c) auf ein Stellglied (17) einer Dosiereinrichtung (23) für Hydrazin unter Verwendung der in der Wissensbasis (29) vorhandenen Symptomen (S) und Regeln (R) berechnet ist, und
• ein Maximalwertauswahlglied (33), mittels welchem aus den regelnden Eingriffen (21a,21b,21c) der wertmäßig größte Eingriff ausgewählt und auf das Stellglied (17) geschaltet ist.

## Claims

1. Hydrazine metering device for a water-steam cycle (22), **characterized by**
• a first measuring element (14) for ascertaining a first measured value (6c) of the oxygen concentration in the feed water downstream of a condenser (26),
• a second measuring element (12) for ascertaining a second measured value (6a) of the oxygen concentration in the feed water upstream of a steam generator (24),
• a third measuring element (13) for ascertaining a third measured value (6b) of the concentration of hydrazine in the feed water upstream of the steam generator (24),
• an expert system (31), which receives as input signals at least the measured values (6c, 6a, 6b) ascertained by the measuring elements (14, 12, 13), for producing a malfunction diagnosis with respect to an undesired entry of oxygen into the water-steam cycle (22) by means of symptoms (S) and rules (R) present in the knowledge base (29),
• at least a first, a second and a third fuzzy controller (18c, 18a and 18b),
- the first fuzzy controller (18c) being fed the first measured value (6c) and also a corresponding first setpoint value (32c),
- the second fuzzy controller (18a) being fed the second measured value (6a) and also a corresponding second setpoint value (32a), and
- the third fuzzy controller (18b) being fed the third measured value (6b) and also a corresponding third setpoint value (32b),
by means of the fuzzy controllers (18a, 18b, 18c), a regulating intervention (21a, 21b, 21c) with respect to a final controlling element (17) of a metering device (23) for hydrazine is calculated on the basis of a malfunction diagnosis produced by the expert system (31), by means of at least the first, the second and the third measured value (6c, 6a, 6b), using the symptoms (S) and rules (R) present in the knowledge base (29), and a maximum-value selection element (33), by means of which the intervention of the greatest value is selected from the regulating interventions (21a, 21b, 21c) and switched to the final controlling element (17).

## Revendications

1. Dispositif doseur d'hydrazine pour un circuit eau-vapeur (22), **caractérisé par**
• un premier élément de mesure (14) pour déterminer une première valeur mesurée (6c) de la concentration en oxygène dans l'eau d'alimentation après un condenseur (26),
• un deuxième élément de mesure (12) pour déterminer une deuxième valeur mesurée (6a) de la concentration en oxygène dans l'eau d'alimentation avant un générateur de vapeur (24),
• un troisième élément de mesure (13) pour déterminer une troisième valeur mesurée (6b) de la concentration en hydrazine dans l'eau d'alimentation avant le générateur de vapeur (24),
• un système expert (31) qui reçoit comme signaux d'entrée au moins les valeurs mesurées (6c, 6a, 6b) déterminées par les éléments de mesure (14, 12, 13) pour établir un diagnostic de perturbation concernant une entrée d'oxygène indésirable dans le circuit eau-vapeur (22) au moyen de symptômes (S) et de règles (R) se trouvant dans une base de connaissances (29),
• au moins un premier, un deuxième et un troisième régulateur flou (18c, 18a et 18b) tels que
- la première valeur mesurée (6c) ainsi qu'une première valeur de consigne correspondante (32c) sont envoyées au premier régulateur flou (18c),
- la deuxième valeur mesurée (6a) ainsi qu'une deuxième valeur de consigne correspondante (32a) sont envoyées au deuxième régulateur flou (18a), et
- la troisième valeur mesurée (6b) ainsi qu'une troisième valeur de consigne correspondante (32b) sont envoyées au troisième régulateur flou (18b), et, après un diagnostic de perturbation établi par le système expert (31) au moins au moyen de la première, de la deuxième et de la troisième valeur mesurée (6c, 6a, 6b), les régulateurs flous (18a, 18b, 18c) calculent chacun une intervention régulatrice (21a, 21b, 21c) sur un élément de réglage (17) d'un dispositif doseur (23) pour l'hydrazine en utilisant des symptômes (S) et règles (R) se trouvant dans la base de connaissances (29), et
• un élément sélecteur de valeur maximale (33) au moyen duquel la plus grande intervention en valeur est sélectionnée parmi les interventions régulatrices (21a, 21b, 21c) et est branchée sur l'élément de réglage (17).
